Europäisches Patentamt

European Patent Office

Office européen des brevets

(19)

(11) Numéro de publication : **0 279 758 B1**

(12)                    **FASCICULE DE BREVET EUROPEEN**

(45) Date de publication du fascicule du brevet :
18.09.91 Bulletin 91/38

(51) Int. Cl.⁵ : **G01P 5/08**

(21) Numéro de dépôt : **88430002.1**

(22) Date de dépôt : **29.01.88**

(54) **Capteurs électromagnétiques pour mesurer la vitesse d'écoulement d'un fluide conducteur.**

(30) Priorité : 04.02.87 FR 8701438
23.04.87 FR 8705892

(43) Date de publication de la demande :
24.08.88 Bulletin 88/34

(45) Mention de la délivrance du brevet :
18.09.91 Bulletin 91/38

(84) Etats contractants désignés :
DE FR GB NL SE

(56) Documents cités :
FR-A- 2 182 691
GB-A- 1 289 120
US-A- 3 940 983

(73) Titulaire : **Nosley, Jaques André**
**Villa La Vigie 103, Traverse Montcault**
**F-13013 Marseille (FR)**

(72) Inventeur : **Nosley, Jaques André**
**Villa La Vigie 103, Traverse Montcault**
**F-13013 Marseille (FR)**

(74) Mandataire : **Moretti, René et al**
**c/o Cabinet BEAU DE LOMENIE**
**"Prado-Mermoz" 232, Avenue du Prado**
**F-13008 Marseille (FR)**

## Description

La présente invention a pour objet des capteurs électromagnétiques destinés à mesurer la vitesse d'écoulement relative d'un fluide conducteur de l'électricité.

Un capteur selon l'invention peut servir également à mesurer la vitesse relative de déplacement d'un mobile portant le capteur par rapport à un fluide conducteur dans lequel il se déplace, notamment à mesurer la vitesse relative d'un bateau par rapport à l'eau.

Un capteur selon l'invention est basé sur la loi de Faraday selon laquelle un conducteur qui se déplace dans un champ magnétique est le siège d'une force contre électromotrice, proportionnelle à la vitesse de déplacement.

On connaît déjà des capteurs de vitesse ou lochs électromagnétiques destinés à mesurer la vitesse relative d'un fluide par rapport à un corps plongé dans ledit fluide ou la vitesse de déplacement relative d'un mobile dans un fluide basés sur la loi de Faraday.

Un inconvénient de ces capteurs réside dans le fait que les électrodes entre lesquelles on recueille le signal de sortie se trouvent pratiquement dans l'alignement de la face externe de la paroi le long de laquelle s'écoule le fluide conducteur, ce qui rend la mesure tributaire de phénomènes de couche limite.

Il est évident que la pénétration du champ magnétique et du courant dans le fluide est d'autant meilleure que les dimensions transversales sont plus grandes. Toutefois, la profondeur de pénétration croît lentement en fonction du diamètre du capteur et pour améliorer nettement les performances, on est conduit à adopter des diamètres de capteurs importants qui augmentent nettement les coûts de construction et d'entretien.

Un inconvénient des capteurs de vitesse électromagnétiques connus à ce jour est que leur conception ne permet pas de loger dans le même boîtier un deuxième capteur de vitesse, par exemple un capteur piézo-électrique afin de réduire le coût global.

Un objectif de la présente invention est de procurer des capteurs de vitesse électromagnétiques conçus de telle sorte que, pour un diamètre égal, la pénétration du courant dans le fluide est plus profonde.

Un autre objectif de la présente invention est de procurer des capteurs de vitesse électromagnétiques équipés d'électrodes telles que l'on obtienne entre celles-ci une différence de potentiel maxima au moyen d'une électrode centrale qui se trouve au potentiel maxima et d'une deuxième électrode ou d'une pluralité d'électrodes qui délivrent un potentiel moyen représentatif du potentiel à l'infini, tout en restant dans des dimensions de capteur raisonnables.

La publication G.B. A. 1.289.120 (TOKYO KEIKI C°), décrit des lochs électromagnétiques pour mesurer la vitesse d'un bateau. Ce brevet cite un capteur connu qui comporte un boîtier dont l'extrémité supérieure est fixée sous la coque d'un bateau, de sorte que le boîtier est plongé entièrement dans l'eau. Le boîtier contient un électro-aimant à axe vertical qui est excité par un courant alternatif. Il porte deux électrodes placées sur une ligne transversale à la coque. Ce mode de réalisation ancien présente l'inconvénient que le boîtier n'est pas protégé par la coque et risque d'être endommagé. Ce brevet décrit des nouveaux capteurs qui comportent un ou deux électro-aimants fixes qui sont situés à l'intérieur de la coque du bateau et qui sont verticaux ou horizontaux et transversaux à la coque.

Ces capteurs comportent, en outre, une électrode placée au centre de l'électro-aimant et une ou plusieurs électrodes éloignées de la précédente, la ligne joignant les électrodes pouvant être transversale ou longitudinale par rapport à la coque.

Le brevet U.S.A. 3.940.983 (L. GREENE) décrit des indicateurs de vitesse et de direction d'écoulement d'un fluide, qui comportent un boîtier ayant une face terminale placée au contact d'un fluide en mouvement relatif par rapport au boîtier. Le boîtier contient un barreau aimanté horizontal, qui est entraîné en rotation par un moteur. La face terminale porte une électrode centrale et une électrode circulaire coaxiale placées au contact du fluide. Le boîtier contient, en outre, deux transducteurs photo-électriques décalés angulairement de 90°, qui sont placés de part et d'autre d'un voile en forme d'arc de cercle entraîné en rotation par le moteur. Ces transducteurs émettent des impulsions servant de référence de phase.

Un autre objectif de la présente invention est de procurer des capteurs électromagnétiques pour mesurer la vitesse relative d'un fluide conducteur du type comportant au moins un électro-aimant fixe, qui crée un champ magnétique parallèle à la paroi le long de laquelle s'écoule le fluide qui soient moins complexes et moins onéreux que les capteurs électromagnétiques à champ tournant connus.

Un autre objectif de l'invention est de procurer des capteurs électromagnétiques qui permettent de mesurer à la fois la composante longitudinale et la composante transversale de la vitesse relative d'un bateau.

Un autre objectif de l'invention est de procurer des capteurs électromagnétiques ayant une forme et une structure qui permettent de les combiner avec des capteurs piézo-électriques placés à l'intérieur du même boîtier servant d'écho sondeurs pour mesurer la profondeur du fond de la mer ou de lochs piézo-électriques sans diminuer les performances et la précision des capteurs électro-magnétiques.

Les objectifs de l'invention sont atteints au moyen d'un capteur électromagnétique pour mesurer la vitesse relative d'écoulement d'un fluide conducteur le long d'une paroi, comportant, en combinaison, un boîtier cylindrique, qui est placé du côté de ladite paroi opposée audit fluide, et dont une extrémité frontale est obturée par une plaque plane, en un matériau isolant non magnétique, qui est insérée dans ladite paroi, lequel boîtier contient un électro-aimant fixe, disposé parallèlement à ladite paroi et perpendiculairement à la direction moyenne d'écoulement dudit fluide, lequel boîtier comporte, en outre, une électrode principale qui est placée sensiblement au milieu de ladite plaque plane et une ou plusieurs électrodes périphériques qui sont disposées autour de ladite plaque plane sur un cercle centré sur ladite électrode principale, lesquelles électrodes sont en contact avec ledit fluide.

Selon un mode de réalisation préférentiel, un capteur selon l'invention comporte une seule électrode périphérique qui est constituée par une collerette circulaire conductrice qui entoure ladite extrémité frontale du boîtier et qui est située à l'extérieur de celui-ci.

Selon un autre mode de réalisation, le boîtier est conducteur et ladite électrode périphérique est constituée par le bord frontal dudit boîtier qui est placé au contact dudit fluide.

Selon un autre mode de réalisation, un capteur selon l'invention comporte plusieurs électrodes périphériques ponctuelles qui sont situées sur un cercle centré sur ladite électrode principale et qui sont disposées symétriquement par rapport à un plan vertical parallèle à la direction d'écoulement du fluide passant par le milieu dudit électro-aimant et par l'électrode principale, lesquelles électrodes sont connectées en parallèle.

L'invention a pour résultat de nouveaux capteurs électromagnétiques utilisables pour mesurer la vitesse relative d'un fluide conducteur par rapport à une paroi fixe le long de laquelle il s'écoule ou pour mesurer la vitesse relative d'un mobile, par exemple d'un bateau par rapport à un fluide.

Le signal électrique de sortie d'un capteur selon l'invention est une différence de potentiel prélevée entre une première électrode centrale placée à l'endroit où le potentiel est le plus élevé par rapport au potentiel zéro et une ou plusieurs électrodes périphériques qui fournissent un potentiel de référence stable, se rapprochant du potentiel à l'infini, de sorte que les mesures de vitesse obtenues sont très précises et ne sont pas faussées par des perturbations de l'écoulement du fluide ou par des variations de température ou de conductibilité électrique de celui-ci.

Les capteurs électromagnétiques selon l'invention peuvent être facilement combinés, dans un même boîtier, avec un ou deux lochs piézo-électriques, ce qui permet d'obtenir par des moyens différents deux mesures de la vitesse longitudinale et/ou transversale et de détecter des erreurs de mesure.

Les capteurs selon l'invention comportant une électrode circulaire et une électrode centrale permettant de placer dans un même boîtier deux électro-aimants croisés et de mesurer successivement la composante longitudinale et la composante transversale du vecteur vitesse en utilisant les mêmes électrodes et les mêmes circuits électriques et électroniques d'où la possibilité de connaître la direction du vecteur vitesse relative avec un appareil relativement peu coûteux.

La description suivante se réfère aux dessins annexés qui représentent, sans aucun caractère limitatif, des exemples de réalisation de capteurs électromagnétiques selon l'invention.

La figure 1 est une coupe transversale partielle d'un bateau équipé d'un capteur de vitesse électromagnétique selon l'invention.

La figure 2 est une vue de dessous de la figure 1.

La figure 3 est une coupe transversale partielle d'un bateau équipé d'un deuxième mode de réalisation d'un capteur de vitesse selon l'invention.

La figure 4 est une vue de dessous de la figure 3.

La figure 5 est une coupe transversale partielle d'un bateau équipé d'un troisième mode de réalisation d'un capteur de vitesse selon l'invention.

La figure 6 est une vue de dessous de la figure 5.

Les figures 7 et 8 sont une coupe verticale transversale et une coupe horizontale selon VIII-VIII d'un mode de réalisation d'un capteur comportant deux électro-aimants croisés.

Les figures 10 et 11 sont une coupe verticale longitudinale et une vue de dessous d'un mode de réalisation d'un appareil comportant dans un même boîtier un capteur électromagnétique pour mesurer la vitesse transversale et deux transducteurs piézo-électriques pour mesurer la vitesse longitudinale.

Les figures 12 et 13 sont une coupe verticale longitudinale et une coupe horizontale selon XIII-XIII d'un appareil comportant dans un même boîtier un capteur électromagnétique transversal et deux transducteurs piézo-électriques pour mesurer la vitesse longitudinale.

Les figures 14 et 15 sont une coupe verticale longitudinale et une coupe horizontale selon XV-XV d'un appareil comportant dans un même boîtier un capteur électromagnétique pour mesurer la vitesse longitudinale et deux paires de transducteurs piézo-électriques.

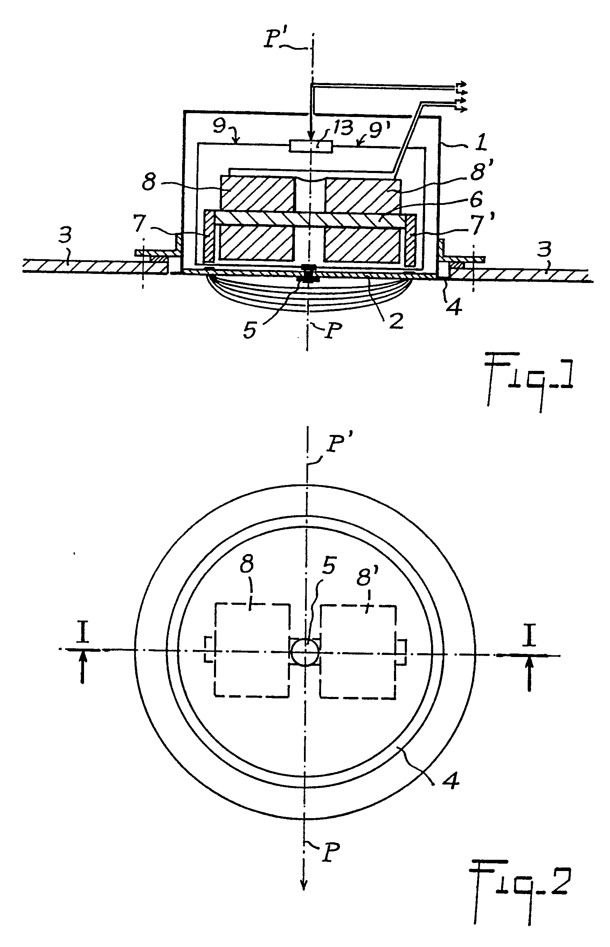

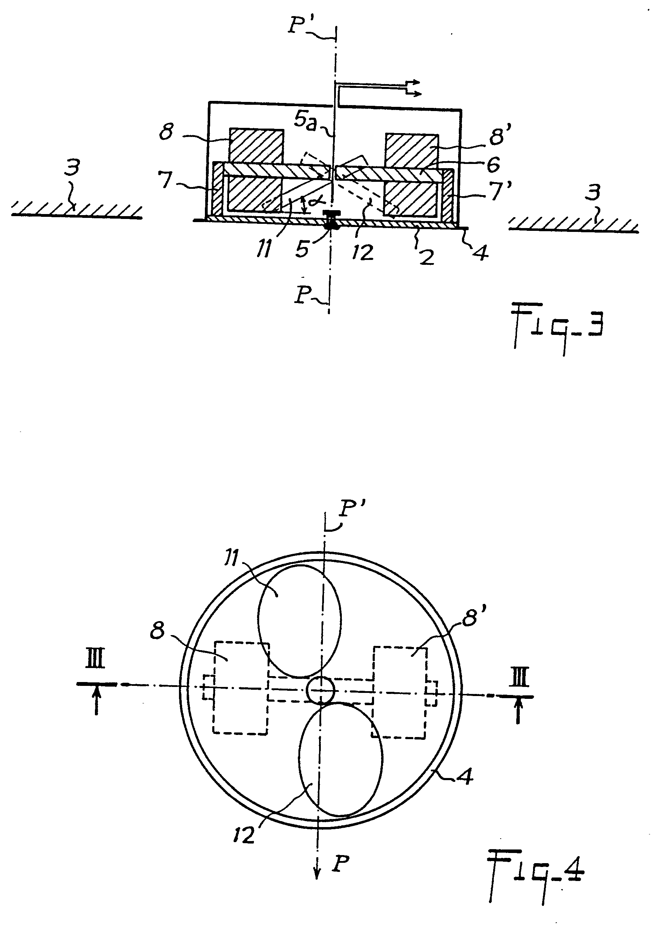

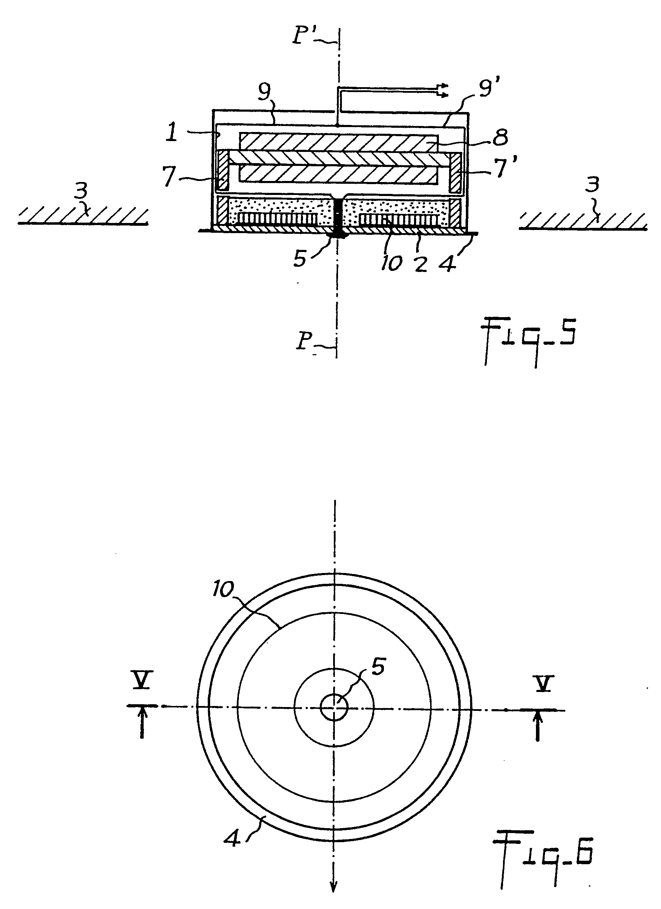

Les figures 1 et 2 représentent une coupe transversale partielle et une vue de dessous d'un véhicule se déplaçant dans un fluide conducteur de l'électricité, par exemple d'un bateau. Le repère 3 représente une portion du fond de la coque qui comporte une ouverture dans laquelle vient s'insérer, de façon étanche, l'extrémité inférieure 2 d'un boîtier cylindrique 1, qui est placé à l'intérieur de la coque et qui contient un capteur de vitesse selon l'invention. L'extrémité inférieure ou frontale du boîtier 1 est obturée, de façon étanche, par une plaque plane 2 qui constitue la face terminale inférieure du boîtier et qui est en un matériau isolant non magnétique, par exemple en matière plastique. Le boîtier 1 est également en matériau non magnétique, mais il peut, avantageusement, être conducteur électrique par exemple en matière plastique rendue conductrice par une charge de particules d'aluminium. La figure 1 représente un exemple dans lequel le boîtier 1 est conducteur.

Le boîtier 1 peut également comporter une chemise métallique en métal non magnétique, afin de réduire la résistance série de l'électrode périphérique reliée au boîtier.

Le boîtier 1 contient un électro-aimant comportant un noyau en fer doux 6, qui est disposé horizontalement et transversalement à la coque, c'est-à-dire perpendiculairement à la direction de déplacement relatif de l'eau par rapport à la coque.

L'électro-aimant comporte, en outre, une bobine inductrice qui est composée de deux bobines coaxiales 8 et 8', montées en série et séparées par un espace libre central. Les bobines 8 et 8' sont excitées par un courant alternatif, de préférence, un courant ayant une fréquence de l'ordre de 10 Hz.

Le noyau 6 est prolongé à ses deux extrémités par deux pièces polaires 7 et 7' en fer doux, qui sont perpendiculaires à la plaque 2 et dont les extrémités sont placées au contact de cette plaque.

Lorsqu'on excite les bobines 8, 8', l'électro-aimant produit dans l'eau un champ magnétique dont les lignes de force allant d'un pôle à l'autre sont représentées en traits fins.

La plaque 2 porte, en son centre, une première électrode 5, dite électrode principale ou centrale.

Le capteur comporte, un outre, une ou plusieurs électrodes dites périphériques qui sont disposées sur un cercle centré sur l'électrode principale 5.

Les figures 1 et 2 représentent un mode de réalisation dans lequel le capteur comporte une seule électrode périphérique constituée par une collerette annulaire 4, en métal conducteur, qui est fixée autour de l'extrémité inférieure du boîtier 1 et à l'extérieur de celui-ci. L'anneau 4 est par nature au même potentiel que les parties métalliques adjacentes et celles-ci peuvent être utilisées aux lieux et place de l'anneau 4.

Si l'enveloppe du capteur est en matériaux isolants, l'anneau 4 peut être remplacé par plusieurs électrodes ponctuelles réparties symétriquement sur un cercle centré sur l'electrode principale 5. Le champ magnétique est symétrique par rapport à un plan médian passant par le milieu de l'électro-aimant et par l'électrode principale 5 et parallèle à l'axe longitudinal du bateau et les électrodes périphériques sont disposées symétriquement par rapport à ce plan. PP'.

Les électrodes 5 et 4 sont placées au contact du fluide en mouvement.

Lorsqu'on excite l'électro-aimant, il produit dans l'eau, au voisinage de la paroi 3, un champ magnétique transversal à la direction d'écoulement du fluide conducteur qui engendre, entre les deux électrodes 5 et 4, une force électromotrice donnant naissance à un courant électrique qui est alternatif lorsque la tension d'excitation est alternative et qui a la même fréquence que la tension d'excitation.

On capte ce courant ou la différence de potentiel entre les deux électrodes 4 et 5 et on obtient ainsi un signal électrique dont l'amplitude indique la vitesse relative du bateau par rapport au fluide dans la direction perpendiculaire au champ magnétique donc suivant l'axe longitudinal du bateau.

Les électrodes 4 et 5 doivent affleurer la face externe de la coque pour éviter d'être détériorées et de créer une traînée. Il en résulte qu'elles sont placées dans une couche limite de fluide dont le mouvement relatif par rapport à la paroi est faible. Le problème à résoudre est d'obtenir malgré cela un signal de niveau suffisant. Il faut donc utiliser des électrodes positionnées ou formées de telle sorte que l'une d'elles fournisse le potentiel à l'infini afin d'obtenir une différence de potentiel maxima et stable entre les deux électrodes.

Dans les dispositifs connus, on utilise une électrode centrale équivalente à l'électrode 5 et une deuxième électrode éloignée qui est censée donner le potentiel à l'infini. Toutefois, l'expérience montre que le potentiel de cette deuxième électrode peut fluctuer sensiblement par suite de perturbations de l'écoulement du fluide, ce qui fausse les mesures de vitesse et peut conduire à des erreurs cumulées importantes, lorsque les mesures de vitesse sont utilisées pour calculer le trajet parcouru par un bateau, par exemple dans le cas d'un sous-marin en plongée.

L'utilisation d'une électrode circulaire permet d'obtenir un potentiel de référence représentatif du potentiel à l'infini qui est beaucoup plus stable grâce à la disposition symétrique par rapport au plan PP' parallèle au plan longitudinal du bateau passant par le centre de l'électro-aimant. Ce résultat est obtenu sans avoir à éloigner l'électrode circulaire 4 à grande distance de l'électrode centrale 5.

L'expérience a montré qu'un anneau métallique 4 placé autour de l'extrémité inférieure du boîtier et à l'extérieur de celui-ci délivrait un potentiel de référence stable présentant une différence de potentiel maximale par rapport au potentiel de l'électrode centrale et peu sensible aux variations de température de l'eau.

La tension de l'électrode centrale peut être prélevée de deux façons différentes.

Suivant un premier mode représenté sur la figure 1, l'électrode 5 est connectée sur deux conducteurs 9 et 9' situés tous deux dans le plan transversal contenant le noyau 6, lesquels conducteurs aboutissent aux deux extrémités d'un potentiomètre 13 qui est placé dans le plan médian PP' et en prélève la tension de référence sur le curseur du potentiomètre 13.

On voit que les deux conducteurs 9 et 9' définissent deux demi-boucles situées dans le plan du champ magnétique de sorte que le flux magnétique traversant ces deux demi-boucles est réduit et les tensions parasites prenant naissance dans ces boucles par auto-indication sont donc réduites.De plus, les deux tensions induites sont en opposition de phase. En déplaçant le curseur du potentiomètre 13, on égalise les amplitudes des deux tensions parasites de sorte que celles-ci se compensent exactement en s'annulant.

En variante, l'électrode centrale 5 peut être reliée aux circuits électroniques par deux fils 9 et 9′ torsadés ensemble à partir de leur point de rencontre et jusqu'au potentiomètre, ce qui permet de positionner le potentiomètre ailleurs que dans le plan de symétrie PP′.

Selon une autre variante représentée sur la figure 3, la tension de l'électrode centrale 5 est prélevée par un conducteur vertical 5a situé dans le plan de symétrie PP′ et passant à travers le noyau 6 et entre les deux bobines 8 et 8′.

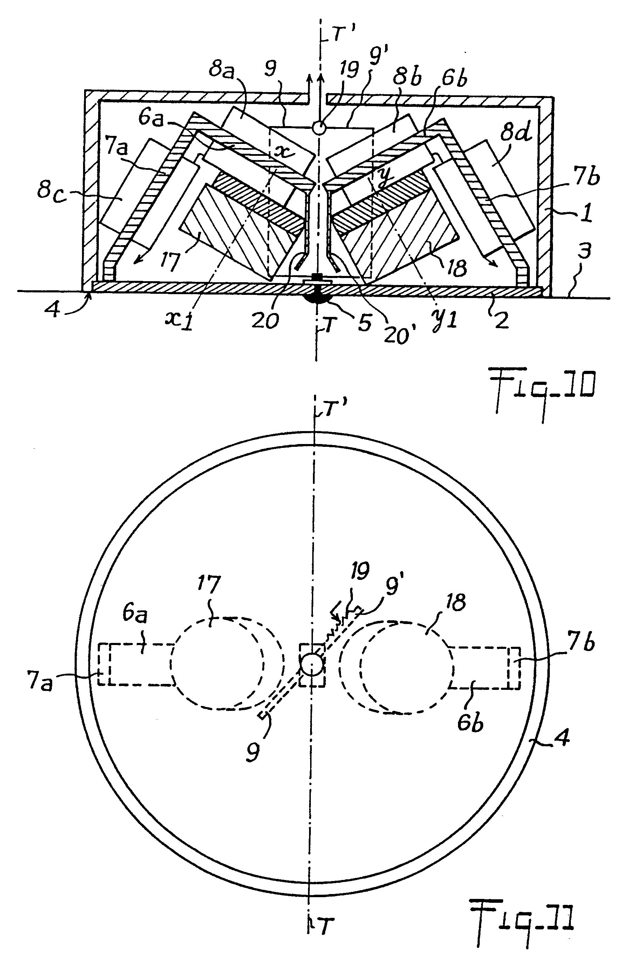

La figure 5 représente une variante dans laquelle l'électrode centrale 5 est connectée sur deux conducteurs 9, 9′ symétriques par rapport au plan PP′ sans utilisation d'un potentiomètre.

Les figures 1, 3 et 5 représentent des exemples de réalisation dans lesquels le boîtier 1 est conducteur et la tension de l'électrode périphérique 4 est prélevée sur l'axe de la partie supérieure du boîtier.

Dans le cas où l'électrode périphérique 4 est constituée par plusieurs électrodes ponctuelles, celles-ci sont reliées en parallèle sur un conducteur de sortie, de telle sorte que les tensions d'auto-induction s'annulent.

Le câble bifilaire reliant le boîtier 1 aux circuits électroniques de traitement et d'exploitation des signaux ainsi que le câble d'excitation de l'électro-aimant sont anti-inducteurs et, de préférence, blindés. Le blindage du câble véhiculant le signal de sortie n'est relié à aucun point du capteur.

Les différents composants électriques contenus dans le boîtier : bobines inductrices 8, 8′, conducteurs 9, 9′ sont blindés et sont reliés électriquement au conducteur de sortie de l'anneau 4, c'est-à-dire au boîtier conducteur. Pour la clarté du dessin, ces blindages n'ont pas été représentés. Les masses métalliques situées dans le boîtier 1 sont reliées électriquement à un même point.

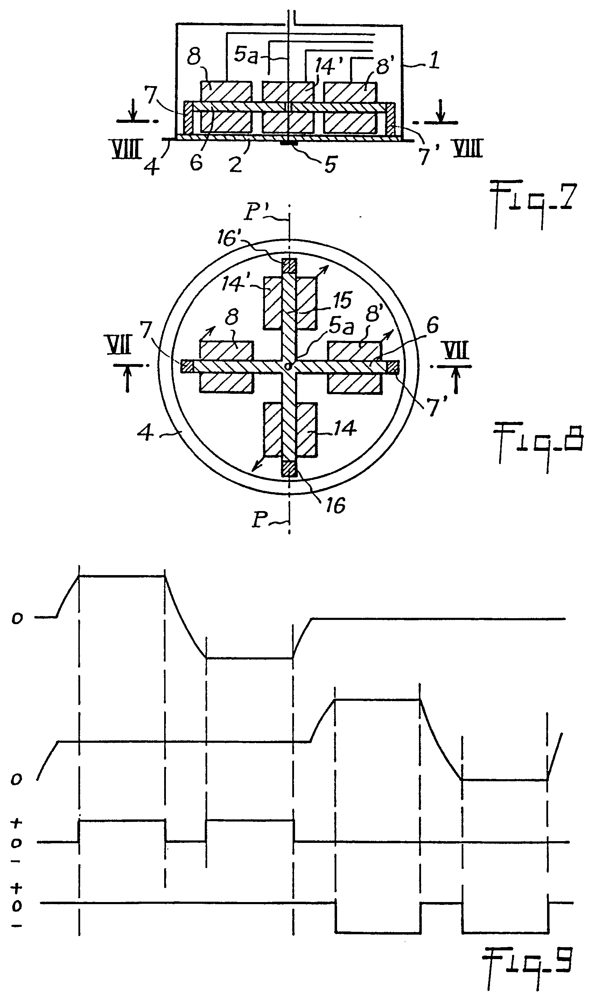

Les figures 3 et 4 représentent respectivement une coupe verticale, transversale et une vue de dessous d'un deuxième mode de réalisation d'un capteur selon l'invention. Les parties homologues sont représentées par les mêmes repères que sur les figures 1 et 2.

Les deux bobines inductrices 8 et 8′ ont une longueur plus réduite et/ou sont écartées l'une de l'autre afin de ménager entre elles un espace libre.

Dans cet espace libre sont insérées deux transducteurs électro-acoustiques, par exemple deux pastilles en céramique piézo-électrique 11 et 12.

Les axes des plaquettes suivant lesquels elles émettent, sont disposés dans des plans transversaux parallèles au plan de la figure 3. Les deux plaquettes sont décalées longitudinalement comme on le voit sur la figure 4, afin de pouvoir les insérer entre les deux bobines. Elles sont inclinées symétriquement.

L'angle d'inclinaison, c'est-à-dire l'angle α de chaque plaquette par rapport à la face terminale 2 est par exemple de l'ordre de 30°.

Les deux transducteurs électro-acoustiques 11 et 12 sont utilisés l'un comme émetteur et l'autre comme récepteur d'ondes acoustiques. Ils permettent de mesurer la dérive transversale du bateau en utilisant l'effet Doppler, c'est-à-dire le changement de fréquence dû à la vitesse du fluide.

La mesure de vitesse d'un fluide par effet Doppler et les appareils permettant d'effectuer cette mesure sont bien connus de l'homme de l'art.

Les figures 3 et 4 représentent un capteur qui comporte, en combinaison, un capteur de vitesse électromagnétique et un capteur à effet Doppler, qui est logé dans le même boîtier,entre les bobines de l'électro-aimant,sans que le fonctionnement de l'un ou de l'autre des deux capteurs ne soit perturbé par la présence de l'autre.

Les figures 3 et 4 représentent un capteur à effet Doppler destiné à mesurer la dérive transversale dont les axes des céramiques sont situés dans un plan transversal. Un tel appareil placé à l'avant d'un navire relativement long permet de bien contrôler les manoeuvres d'accostage.

Les figures 5 et 6 représentent une coupe verticale et une vue de dessous d'un troisième mode de réalisation d'un appareil selon l'invention. Les parties homologues sont représentées par les mêmes repères que sur les figures 1 et 2.

L'appareil selon la figure 5 comportent, dans un même boîtier 1, un capteur de vitesse électromagnétique et un transducteur piézo-électrique utilisé comme écho-sondeur pour mesurer la profondeur du fond de la mer. Le transducteur piézo-électrique comporte une plaquette de céramique piézo-électrique 10 qui est collée sur la face interne de la plaque 2. La plaquette 10 a par exemple la forme d'un disque comportant une ouverture centrale pour le passage de l'électrode 5.

Dans ce mode de réalisation, les pièces polaires 7 et 7′ sont plus longues que dans les modes de réalisation selon les figures 1 et 3 pour permettre de loger le transducteur 10 entre la bobine 8 de l'électro-aimant et le fond du boîtier. Cet allongement des pièces polaires a un effet négligeable sur la réluctance totale du circuit magnétique et ne modifie que très peu le champ magnétique utile. Les pièces polaires 7 et 7′ comportent des trous pour le passage des conducteurs 9 et 9′.

La figure 5 représente un exemple de réalisation dans lequel l'électro-aimant comporte une seule bobine inductrice 8.

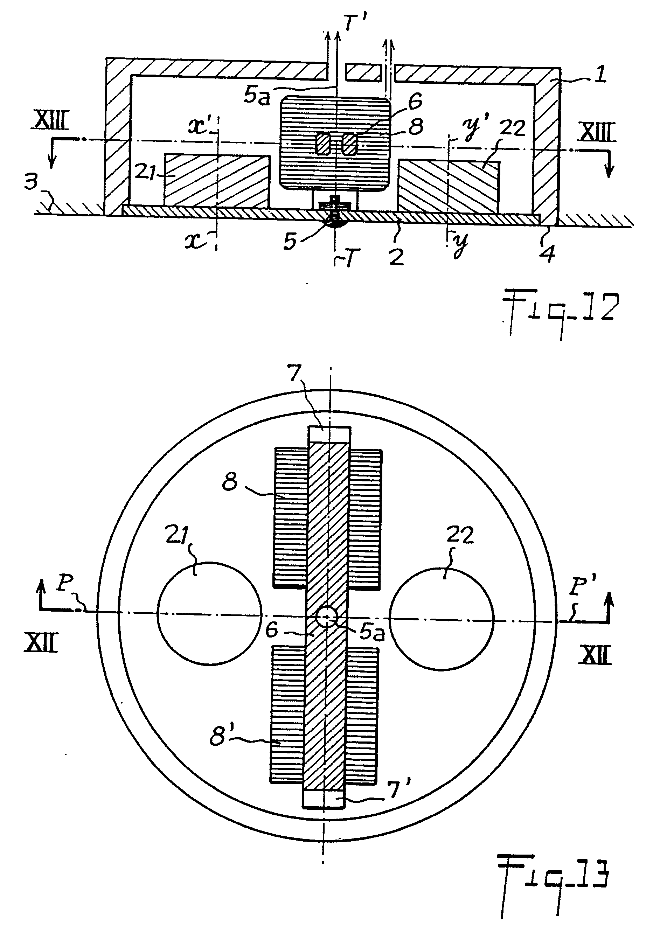

Les figures 7 et 8 représentent respectivement une coupe verticale et une vue de dessous d'un quatrième mode de réalisation d'un appareil selon l'invention. Les parties homologues sont représentées par les mêmes repères que sur les figures 1 à 6.

Le capteur selon les figures 7 et 8 comporte, à l'intérieur d'un même boîtier 1, un premier électro-aimant comportant un noyau en fer doux 6, qui est horizontal et transversal à l'axe longitudinal du bateau et qui est prolongé par deux pièces polaires 7 7'.

L'électro-aimant comporte, en outre, une bobine qui est composée de deux demi-bobines 8 et 8' bobinées et excitées simultanément, de telle sorte qu'elles génèrent dans le barreau un champ magnétique de même sens.

Il comporte, en outre, un deuxième électro-aimant comportant un noyau en fer doux 15 qui est perpendiculaire au noyau 6 avec lequel il forme une seule pièce en forme de croix. Le noyau 15 est donc parallèle au plan de symétrie longitudinal PP'. Il est prolongé par deux pièces polaires 16, 16' ayant la même longueur que les pièces polaires 7, 7'. Le deuxième électro-aimant comporte une bobine d'excitation qui est composée de deux demi-bobines 14, 14' montées en série.

Le capteur comporte, en outre, une électrode principale centrale 5 et une électrode périphérique 4. Les figures représentent un exemple dans lequel le boîtier 1 est conducteur et on prélève la tension sur l'électrode 4 au centre de la paroi supérieure du boîtier.

La première ligne du diagramme de la figure 9 représente le courant d'excitation du premier électro-aimant transversal. La deuxième ligne représente le courant d'excitation du deuxième électro-aimant longitudinal.

On voit que chaque excitation comporte une impulsion positive suivie d'une impulsion négative et que les excitations des deux électro-aimants sont décalées dans le temps, ce qui permet de capter entre les mêmes électrodes 4 et 5 successivement un signal électrique représenté sur la ligne 3 représentant la composante longitudinale de la vitesse relative du fluide et un signal électrique représenté sur la ligne 4 représentent la composante transversale de la vitesse relative du fluide, c'est-à-dire la dérive dans le cas d'un capteur monté sur un bateau.

Les signaux représentés sur les lignes 3 et 4 sont des signaux redressés, ce qui explique que les deux alternances de chaque signal sont de même sens.

Un système d'échantillonnage aiguille les signaux recueillis entre les deux électrodes, respectivement sur deux voies de traitement en synchronisme avec les signaux d'excitation.

Le système d'échantillonnage est conçu pour éliminer les signaux parasites suivant n'importe quel procédé connu.

L'avantage d'un capteur selon les figures 7 et 8 est qu'il présente une symétrie de révolution qui élimine les influences dues aux perturbations de l'écoulement. Un autre avantage est qu'il utilise les mêmes circuits d'amplification et de traitement des signaux et les mêmes électrodes pour mesurer successivement la composante longitudinale et la composante transversale de la vitesse relative, ce qui permet de connaître la direction du vecteur vitesse.

Les figures 10 et 11 représentent respectivement une coupe verticale longitudinale et une vue de dessous d'un autre mode de réalisation d'un appareil selon l'invention comportant, dans un même boîtier 1, à la fois un capteur de vitesse électromagnétique et des transducteurs piézo-électriques qui constituent un loch piézo-électrique permettant de mesurer la vitesse par effet Doppler et par corrélation.

La figure 10 représente une coupe par un plan longitudinal parallèle à la direction relative du fluide.

L'appareil est symétrique par rapport à un plan transversal TT' qui est perpendiculaire à la direction d'écoulement du fluide.

Le boîtier 1 contient un électro-aimant qui comporte quatre bobines 8a, 8b, 8c, 8d montées en série sur un circuit magnétique qui comporte deux demi-noyaux 6a, 6b qui divergent vers le haut symétriquement par rapport au plan TT' et deux pièces polaires 7a, 7b perpendiculaires aux deux demi-noyaux.

L'appareil selon les figures 10 et 11 comporte, en outre, deux transducteurs piézo-électriques 17 et 18 qui sont disposés l'un derrière l'autre par rapport au sens de déplacement que l'on désire mesurer.

Les axes x x1 et y y1 sont les axes piézo-électriques suivant lesquels chaque transducteur émet ou reçoit les ondes acoustiques. Ces axes sont situés dans un même plan longitudinal et sont symétriques par rapport au plan TT'. Ils sont inclinés en divergeant vers le bas. Ces axes forment avec la plaque 2 un angle $\alpha$ qui est de l'ordre de 60°.

Les noyaux 6a, 6b de l'électro-aimant sont sensiblement parallèles au plan des céramiques piézo-électriques et donc perpendiculaires aux axes x x1 et y y1, de sorte que les plaquettes 17 et 18 sont logées à l'intérieur des deux parties en équerre de l'électro-aimant formées par chaque demi-noyau et la pièce polaire qui lui est perpendiculaire.

On voit que les deux transducteurs 17, 18 touchent la plaque 2 au voisinage de l'électrode centrale 5, de telle sorte que celle-ci se trouve hors du champ de rayonnement des transducteurs.

Le diamètre et la disposition des transducteurs sont tels que les ondes acoustiques émises ou captées par les transducteurs ne rencontrent pas l'obstacle constitué par les pièces polaires 7a, 7b qui sont parallèles aux axes x x1 et y y1.

Comme dans le cas de la figure 1, l'électrode centrale est connectée par deux conducteurs 9, 9' sur un potentiomètre 19, qui permet d'éliminer les signaux parasites dûs à l'auto-induction.

Les deux noyaux 6a, 6b sont séparés par un petit entrefer et sont prolongés par deux pièces polaires auxiliaires 20, 20' partant dudit entrefer et encadrant l'électrode centrale 45. Les pièces polaires 20, 20' permettent d'ajuster le champ magnétique au voisinage de l'électrode centrale.

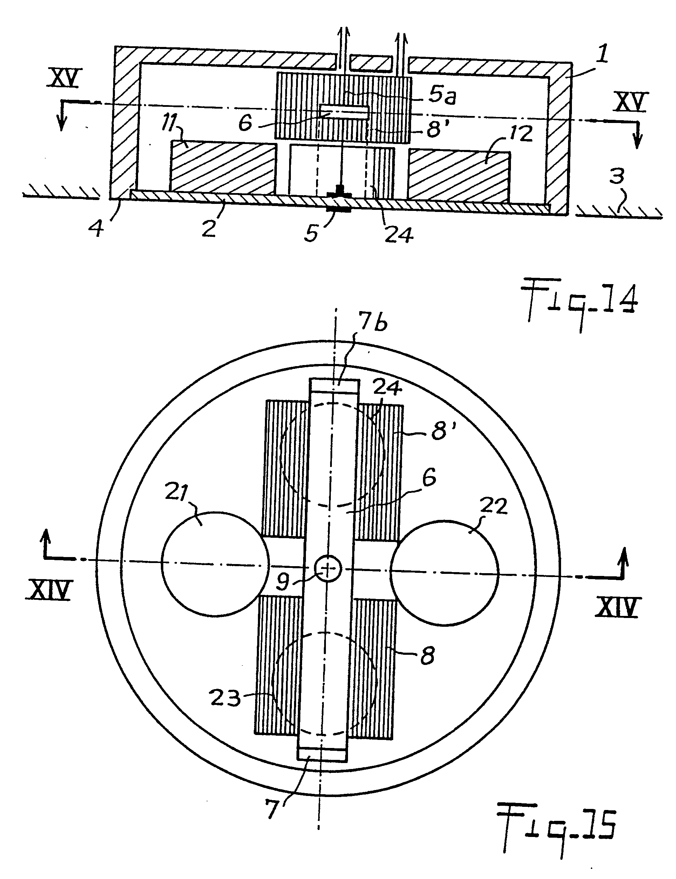

Les figures 12 et 13 représentent une coupe verticale parallèle à la direction d'écoulement du fluide et une coupe horizontale d'un autre mode de réalisation. Les parties homologues sont représentées par les mêmes repères.

L'appareil selon les figures 12 et 13 comporte un électro-aimant transversal (6, 7, 7', 8, 8'), une électrode centrale 5 et une électrode annulaire 4 constituée par le bord inférieur du boîtier 1 qui est conducteur.

Il comporte, en outre, en combinaison dans le même boîtier deux transducteurs piézo-électriques identiques 21, 22 qui sont placés de part et d'autre de l'électro-aimant, sur une même ligne parallèle à la direction d'écoulement du fluide et qui ont des axes x x' et y y' verticaux.

Cette disposition des transducteurs de part et d'autre de l'électro-aimant nécessite un boîtier 1 légèrement plus grand.

Les transducteurs 21 et 22 appartiennent par exemple à un loch piézo-électrique permettant de mesurer la vitesse longitudinale du bateau.

On obtient ainsi un appareil permettant de mesurer simultanément la vitesse du bateau, dans une même direction, au moyen d'un capteur électromagnétique et d'un loch piézo-électrique, ce qui permet de vérifier l'exactitude des mesures.

Les figures 14 et 15 représentent une coupe verticale parallèle à l'axe du bateau et une coupe horizontale selon XV-XV d'un autre appareil selon l'invention, qui comporte à l'intérieur d'un boîtier conducteur 1, à la fois un capteur électromagnétique de vitesse longitudinale constitué par l'électro-aimant 6, 7, 7', 8, 8' disposé transversalement au navire et quatre transducteurs piézo-électriques identiques 21, 22, 23, 24 à axe vertical qui sont disposés en croix autour de l'électrode centrale 5.

La paire de transducteurs piézo-électriques 21, 22 constitue un loch ultrasonique à corrélation de type connu destiné à mesurer la vitesse longitudinale du bateau. La paire 23 et 24 constitue un loch ultrasonique à corrélation destiné à mesurer la vitesse transversale.

Le loch longitudinal permet d'étalonner le capteur électromagnétique.

On rappelle qu'un loch ultrasonique à corrélation comporte deux transducteurs piézo-électriques écartés l'un de l'autre, de sorte qu'un écho ultrasonore réfléchi par le fond de la mer atteint les deux transducteurs avec un décalage dans le temps qui dépend de la vitesse du navire.

On décale l'un des échos pour le faire coïncider avec l'autre et le décalage fournit une mesure de la vitesse du bateau dans la direction reliant les deux transducteurs.

## Revendications

1. Capteur électromagnétique pour mesurer la vitesse relative d'écoulement d'un fluide conducteur le long d'une paroi (3) comportant, en combinaison, un boîtier cylindrique (1), qui est placé du côté de ladite paroi opposée audit fluide, et dont une extrémité frontale est obturée par une plaque plane (2), en un matériau isolant non magnétique, qui est insérée dans ladite paroi (3), lequel boîtier contient un barreau aimanté (6) disposé parallèlement à ladite paroi (2) et au moins deux électrodes (5, 4) concentriques, en contact avec ledit fluide, caractérisé en ce que ledit barreau aimanté est un électro-aimant fixe (8, 8'), dont les extrémités (7, 7') perpendiculaires à la direction moyenne d'écoulement dudit fluide et une électrode dite principale (5) est placée sensiblement au milieu de ladite plaque plane (2) et une ou plusieurs électrodes périphériques (4) sont disposées autour de ladite plaque plane (2) sur un cercle centré sur ladite électrode principale (5).

2. Capteur selon la revendication 1, caractérisé en ce qu'il comporte une seule électrode périphérique qui est constituée par une collerette circulaire conductrice (4), qui entoure ladite extrémité frontale du boîtier et qui est située à l'extérieur de celui-ci.

3. Capteur selon la revendication 1, caractérisé en ce que ledit boîtier (1) est conducteur et ladite électrode périphérique (4) est constituée par le bord frontal dudit boîtier qui est placé au contact dudit fluide.

4. Capteur selon la revendication 1, caractérisé en ce qu'il comporte plusieurs électrodes périphériques ponctuelles qui sont situées sur un cercle centré sur ladite électrode principale (5) et qui sont disposées symétriquement par rapport à un plan vertical (PP') parallèle à la direction d'écoulement du fluide passant par le milieu dudit électro-aimant et par l'électrode principale (5), lesquelles électrodes sont connectées en parallèle.

5. Capteur selon l'une quelconque des revendications 1 à 4, caractérisé en ce que ladite électrode principale (5) est connectée sur deux conducteurs (9, 9'), situés dans le plan transversal contenant ledit électro-aimant et symétriques par rapport à un plan vertical (PP'), parallèle à la direction d'écoulement du fluide passant par le milieu dudit électro-aimant, lesquels conducteurs sont connectés aux deux extrémités d'un potentiomètre (13) et on prélève la tension mesurée sur le curseur dudit potentiomètre que l'on déplace pour annuler les tensions parasites dues à l'auto-induction.

6. Capteur selon l'une quelconque des revendications 1 à 5, caractérisé en ce que le noyau (6) dudit électro-aimant est prolongé par deux pièces polaires (7, 7bis) perpendiculaires à ladite plaque plane (2) et ledit boîtier contient, en outre, un transducteur piézoélectrique (10) qui est placé contre ladite plaque plane (2) et qui sert d'écho-sondeur pour mesurer la profondeur du fond d'une étendue d'eau.

7. Dispositif selon l'une quelconque des revendications 1 à 5, caractérisé en ce que ledit électro-aimant comporte deux bobines d'induction (8, 8') écartées l'une de l'autre et ledit boîtier (1) contient, en outre, deux transducteurs piézo-électriques (11, 12) qui sont logés entre lesdites bobines et qui sont inclinés symétriquement par rapport à un plan vertical (PP') parallèle à la direction de l'écoulement et passant par le milieu dudit électro-aimant.

8. Capteur selon l'une quelconque des revendications 1 à 5, caractérisé en ce que ledit boîtier (1) contient un deuxième électro-aimant (14, 14', 15, 16, 16'), identique et perpendiculaire au premier et ledit capteur est connecté à des circuits électroniques permettant d'exciter l'un après l'autre les deux électro-aimants et d'aiguiller les différences de potentiel entre les deux électrodes successivement sur deux voies, en synchronisme avec l'excitation des deux électroaimants.

9. Dispositif selon l'une quelconque des revendications 1 à 5, caractérisé en ce que ledit boîtier (1) contient un électro-aimant disposé dans un plan parallèle à la direction d'écoulement du fluide, lequel électro-aimant est symétrique par rapport à un plan (TT') perpendiculaire à la direction d'écoulement et comporte un noyau composé de deux demi-noyaux (6a, 6b) qui divergent vers le haut, de deux pièces polaires (7a, 7b) perpendiculaires auxdits demi-noyaux et de quatre bobines (8a, 8b, 8c. 8d) et ledit boîtier contient, en outre, deux transducteurs piézo-électriques (17, 18), symétriques par rapport audit plan (TT') dont les axes (xx', yy') divergent vers le bas et sont sensiblement parallèles auxdites pièces polaires (7a, 7b).

10. Capteur selon la revendication 9, caractérisé en ce que les deux demi-noyaux sont séparés par un petit entrefer et sont prolongés par deux pièces polaires auxiliaires (20, 20') partant dudit entrefer et encadrant l'électrode centrale (5).

11. Dispositif selon l'une quelconque des revendications 1 à 5, caractérisé en ce que ledit boîtier (1) contient en outre, une première paire de transducteurs piézo-électriques identiques (12, 22), placés à plat contre la face interne de ladite plaque plane (2), de part et d'autre dudit électro-aimant transversal sur une ligne parallèle à la direction d'écoulement dudit fluide, lesquels transducteurs constituent un loch piézo-électrique de sorte que ledit capteur permet de mesurer simultanément la vitesse d'un bateau ou d'un fluide dans une même direction au moyen d'un capteur électromagnétique et d'un loch piézo-électrique contenus dans un même boîtier.

12. Dispositif selon la revendication 11, caractérisé en ce que ledit boîtier contient une deuxième paire de transducteurs piézo-électriques identiques (23, 24) qui sont disposés en croix par rapport aux transducteurs de la première paire et qui constituent un deuxième loch piézo-électrique permettant de mesurer la composante transversale de la vitesse relative du fluide ou la dérive latérale d'un bateau.

## Claims

1. Electromagnetic sensor for measuring the relative velocity of flow of a conductive fluid along a wall (3) comprising, in combination, a cylindrical casing (1), which is located to the side of said wall opposite said fluid, and one front end of which is obturated by a flat plate (2), made of a non-magnetic insulating material, which plate is inserted in said wall (3), which casing contains a bar magnet (6) disposed parallel to said wall (3) and at least two concentric electrodes (5, 4), in contact with said fluid, characterised in that said bar magnet is a fixed electromagnet (8, 8'), the ends (7, 7') of which are perpendicular to the mean direction of flow of said fluid and one electrode referred to as the main electrode (5) is located substantially at the centre of said flat plate (2) and one or more peripheral electrodes (4) are disposed about said flat plate (2) on a circle centred on said main electrode (5).

2. Sensor according to Claim 1, characterised in that it comprises a single peripheral electrode which is constituted by a circular conductive collar (4), which surrounds said front end of the casing and which is situated outside the latter.

3. Sensor according to Claim 1, characterised in that said casing (1) is conductive and said peripheral electrode (4) is constituted by the front edge of said casing, which is located in contact with said fluid.

4. Sensor according to Claim 1, characterised in that it comprises a plurality of point peripheral electrodes which are situated on a circle centred on said main electrode (5) and which are disposed symmetrically in relation to a vertical plane (PP') parallel to the direction of flow of the fluid passing through the centre of said electromagnet and through the main electrode (5), which electrodes are connected in parallel.

5. Sensor according to any one of Claims 1 to 4, characterised in that said main electrode (5) is connected to two conductors (9, 9'), which are situated in the transverse plane containing said electromagnet and are symmetrical in relation to a vertical plane (PP'), parallel to the direction of flow of the fluid passing through the centre of said electromagnet, which conductors are connected to the two ends of a potentiometer (13) and the voltage measured is tapped off on the slide of said potentiometer, which is displaced to cancel the extraneaous voltages due to self-induction.

6. Sensor according to any one of Claims 1 to 5, characterised in that the core (6) of said electromagnet is extended by two pole pieces (7, 7a) perpendicular to said flat plate (2) and said casing further contains a piezoelectric transducer (10) which is located against said flat plate (2) and which serves as echo sounder to measure the depth of the base of a stretch of water.

7. Device according to any one of Claims 1 to 5, characterised in that said electromagnet comprises two induction coils (8, 8') spaced from one another and said casing (1) further contains two piezoelectric transducers (11, 12) which are accommodated between said coils and which are inclined symmetrically in relation to a vertical plane (PP') parallel to the direction of the flow and passing through the centre of said electromagnet.

8. Sensor according to any one of Claims 1 to 5, characterised in that said casing (1) contains a second electromagnet (14, 14', 15, 16, 16'), which is identical and perpendicular to the first one and said sensor is connected to electronic circuits permitting the excitation, one after the other, of the two electromagnets and the switching of the potential differences between the two electrodes successively onto two channels, in synchronism with the excitation of the two electromagnets.

9. Device according to any one of Claims 1 to 5, characterised in that said casing (1) contains an electromagnet disposed in a plane parallel to the direction of flow of the fluid, which electromagnet is symmetrical in relation to a plane (TT') perpendicular to the direction of flow and comprises a core composed of two half-cores (6a, 6b) which diverge in an upward direction, of two pole pieces (7a, 7b) perpendicular to said half-cores and of four coils (8a, 8b, 8c, 8d) and said casing further contains two piezoelectric transducers (17, 18), which are symmetrical in relation to said plane (TT'), the axes (xx', yy') of which diverge in a downward direction and are substantially parallel to said pole pieces (7a, 7b).

10. Sensor according to Claim 9, characterised in that the two half-cores are separated by a small air gap and are extended by two auxiliary pole pieces (20, 20') proceeding from said air gap and framing the central electrode (5).

11. Device according to any one of Claims 1 to 5, characterised in that said casing (1) further contains a first pair of identical piezoelectric transducers (12, 22), which are located flat against the internal face of said flat plate (2), on either side of said transverse electromagnet on a line parallel to the direction of flow of said fluid, which transducers constitute a piezoelectric cavity, so that said sensor permits the simultaneous measurement of the velocity of a boat or of a fluid in one and the same direction by means of an electromagnetic sensor and of a piezoelectric cavity which are contained in one and the same casing.

12. Device according to Claim 11, characterised in that said casing contains a second pair of identical piezoelectric transducers (23, 24) which are crossed in relation to the transducers of the first pair and which constitute a second piezoelectric cavity permitting the measurement of the transverse component of the relative velocity of the fluid or the lateral drift of a boat.

**Patentansprüche**

1. Elektromagnetischer Meßfühler zum Messen der relativen Fließgeschwindigkeit eines leitenden Fluids entlang einer Wand (3), umfassend in Kombination ein zylindrisches Gehäuse (1), welches auf der Seite der Wand gegenüber dem Fluid angeordnet ist und dessen eines Stirnende durch eine plane Platte (2) aus einem nichtmagnetischen Isoliermaterial, die in der Wand (3) eingesetzt ist, verschlossen ist, welches Gehäuse einen parallel zur Wand (2) angeordneten Stabmagneten (6) und mindestens zwei konzentrische Elektroden (5, 4) in Kontakt mit dem Fluid enthält, dadurch gekennzeichnet, daß der Stabmagnet ein ortsfester Elektromagnet (8, 8') ist, dessen Enden (7, 7') senkrecht zur mittleren Fließrichtung des Fluid stehen, und eine Hauptelektrode (5) im wesentlichen in der Mitte der planen Platte (2) und eine oder mehrere Randelektroden (4) um die plane Platte (2) herum auf einem um die Hauptelektrode (5) zentrierten Kreis angeordnet sind.

2. Meßfühler nach Anspruch 1, dadurch gekennzeichnet, daß er eine einzige Randelektrode umfaßt, die durch einen leitenden kreisförmigen Kragen (4) gebildet ist, welcher das Stirnende des Gehäuses umgibt und sich außerhalb desselben befindet.

3. Meßfühler nach Anspruch 1, dadurch gekennzeichnet, daß das Gehäuse (1) leitend ist und die Randelektrode (4) durch den vorderen Rand des Gehäuses, der mit dem Fluid in Kontakt steht, gebildet ist.

4. Meßfühler nach Anspruch 1, dadurch gekennzeichnet, daß er mehrere punktförmige Randelektroden umfaßt, die sich auf einem um die Hauptelektrode (5) zentrierten Kreis befinden und die symmetrisch zu einer zur Fließrichtung des durch die Mitte des Elektromagneten und durch die Hauptelektrode (5) fließenden Fluids parallelen vertikalen Ebene (PP') angeordnet sind, welche Elektroden parallelgeschaltet sind.

5. Mehfühler nach einem der Ansprüche 1 bis 4, dadurch gekennzeichnet, daß die Hauptelektrode (5) an zwei Leiter (9, 9') angeschlossen ist, die sich in der den Elektromagneten enthaltenden Querebene und symmetrisch zu einer zur Fließrichtung des durch die

Mitte des Elektromagneten fließenden Fluids parallelen vertikalen Ebene (PP') befinden, welche Leiter an zwei Enden eines Potentiometers (13) angeschlossen sind, und man die am Gleitzeiger des Potentiometers (13) gemessene Spannung entnimmt, den man zum Ausschalten der Störspannungen aufgrund der Selbstinduktion verschiebt.

6. Mehfühler nach einem der Ansprüche 1 bis 5, dadurch gekennzeichnet, daß der Kern (6) des Elektromagneten durch zwei zur planen Platte (2) senkrecht stehende Polstücke (7, 7a) verlängert ist und das Gehäuse weiters einen piezoelektrischen Transducer (10) enthält, welcher an der planen Platte (2) anliegt und als Echolot zur Messung der Tiefe des Grundes einer Wasserfläche dient.

7. Vorrichtung nach einem der Ansprüche 1 bis 5, dadurch gekennzeichnet, daß der Elektromagnet zwei im Abstand voneinander befindliche Induktionsspulen (8, 8') umfaßt und das Gehäuse (1) weiters zwei piezoelektrische Transducer (11, 12) enthält, welche zwischen den Spulen angeordnet und symmetrisch zu einer parallel zur Fließrichtung verlaufenden und durch die Mitte des Elektromagneten gehenden vertikalen Ebene (PP') geneigt sind.

8. Meßfühler nach einem der Ansprüche 1 bis 5, dadurch gekennzeichnet, daß das Gehäuse (1) einen zweiten, zum ersten identischen und senkrecht stehenden Elektromagneten (14, 14', 15, 16, 16') enthält und der Meßfühler an elektronische Schaltungen angeschlossen ist, die die Erregung der beiden Elektromagneten nacheinander und die Leitung der Spannungsunterschiede zwischen den beiden Elektroden nacheinander an zwei Leitwegen synchron mit der Erregung der beiden Elektromagneten gestatten.

9. Vorrichtung nach einem der Ansprüche 1 bis 5, dadurch gekennzeichnet, daß das Gehäuse (1) einen in einer zur Fließrichtung des Fluids parallelen Ebene angeordneten Elektromagneten enthält, welcher Elektromagnet symmetrisch zu einer senkrecht zur Fließrichtung verlaufenden Ebene (TT') ist und einen Kern umfaßt, der aus zwei nach oben divergierenden Halbkernen (6a, 6b), aus zwei senkrecht zu den Halbkernen stehenden Polstücken (7a, 7b) und aus vier Spulen (8a, 8b, 8c, 8d) gebildet ist, und daß das Gehäuse weiters zwei piezoelektrische Transducer (17, 18) enthält, die symmetrisch zur Ebene (TT') liegen, deren Achsen (xx', yy') nach unten divergieren und im wesentlichen parallel zu den Polstücken (7a, 7b) sind.

10. Meßfühler nach Anspruch 9, dadurch gekennzeichnet, daß die beiden Halbkerne durch einen kleinen Eisenspalt getrennt und durch zwei Hilfspolstücke (20, 20'), die vom Eisenspalt weggehen und die mittlere Elektrode (5) umrahmen, verlängert sind.

11. Vorrichtung nach einem der Ansprüche 1 bis 5, dadurch gekennzeichnet, daß das Gehäuse (1) weiters ein erstes Paar identischer piezoelektrischer Transducer (21, 22) enthält, die flach gegen die Innenseite der planen Platte (2) zu beiden Seiten des querliegenden Elektromagneten auf einer zur Fließrichtung des Fluids parallelen Linie angeordnet sind, welche Transducer ein piezoelektrisches Log bilden, sodaß der Meßfühler die gleichzeitige Messung der Geschwindigkeit eines Schiffes oder eines Fluids in derselben Richtung mit Hilfe eines elektromagnetischen Meßfühlers und eines piezoelektrischen Logs, die in ein- und demselben Gehäuse enthalten sind, gestattet.

12. Vorrichtung nach Anspruch 11, dadurch gekennzeichnet, daß das Gehäuse ein zweites Paar identischer piezoelektrischer Transducer (23, 24) enthält, die kreuzförmig zu den Transducern des ersten Paares angeordnet sind und ein zweites piezoelektrisches Log darstellen, welches die Messung der Querkomponente der Relativgeschwindigkeit des Fluids oder der seitlichen Abdrängung eines Schiffes gestattet.

Fig.1

Fig.2

Fig-3

Fig-4

Fig-5

Fig-6

Fig.7

Fig.8

Fig.9

Fig-10

Fig-11

Fig-12

Fig-13

Fig. 14

Fig. 15